# DEMANDE DE BREVET EUROPEEN

(11) **EP 4 741 789 A1**
(43) Date de publication de la demande: **13.05.2026**
(21) Numéro de dépôt: 24315514.0
(22) Date de dépôt: 06.11.2024
(51) Int. Cl.: G01M 3/20, G01M 3/22

(54) **DISPOSITIF ET PROCÉDÉ DE DÉTECTION DE FUITE POUR UN MONTAGE DE RACCORD RELIANT DEUX ÉLÉMENTS HYDRAULIQUES CONVOYANT DES SELS FONDUS**

(71) Demandeur: Naarea, 92000 Nanterre (FR)
(72) Inventeur: Rame, Jérémy, 92000 Nanterre (FR); Fricaudet, Matthieu, 92000 Nanterre (FR); Jourdain, Erwan, 92000 Nanterre (FR); Mirotta, Salvatore, 92000 Nanterre (FR)

(57) **Abrégé**

Dispositif de détection de fuite pour caractériser un montage de raccord (2) reliant deux éléments hydrauliques entre eux, avec une canalisation de test (1) comprenant une première portion (C1) en cul-de-sac et une deuxième portion (C2) couplée à la première portion via le montage de raccord, la deuxième portion de canalisation étant mise en pression sous gaz léger, la canalisation de test contenant une quantité prédéterminée de sels fondus (SF), le dispositif comprenant une cinématique de déplacement de la canalisation de test, déplaçable entre une première position (P1) dans laquelle la zone du raccord (Z2) est baignée par les sels fondus contenus dans de la canalisation de test et une deuxième position (P2) dans laquelle la zone du raccord n'est pas baignée par les sels fondus, mais soumise à la pression de gaz léger, le dispositif comprenant une enceinte hermétique (3) renfermant au moins le raccord.

## Description

La présente invention se rapporte à un dispositif de détection de fuite concernant un montage de raccord reliant deux éléments hydrauliques, tels que par exemple des conduites hydrauliques. On s'intéresse en particulier au cas où des conduites et/ou canalisations convoient en service des liquides agressifs du point de vue physico-chimique, tels que des sels fondus à température élevée.

La présente invention se rapporte aussi à un procédé de détection de fuite concernant un montage de raccord reliant deux conduites hydrauliques, et plus généralement deux éléments hydrauliques contenant un liquide chargé de sels fondus. Les éléments hydrauliques peuvent être des conduites, des cuves, des pompes, des récipients tampon, des filtres, etc.

Les conduites hydrauliques d'intérêt ici sont configurées pour convoyer un fluide, notamment un liquide, d'un endroit à un autre dans une installation qui peut être plus ou moins complexe. Un exemple d'installation d'intérêt ici comprend un ou plusieurs circuits de fluide assurant le transport de fluide dans une unité de production à base d'énergie nucléaire.

Selon un exemple particulier, on s'intéresse à des canalisations ou conduites qui transportent un fluide de type sels fondus, à des températures élevées qui se situent typiquement dans une gamme comprise entre 500°C et 950°C.

Lorsque deux conduites sont reliées l'une à l'autre, il est prévu un raccord avec un joint d'étanchéité pour éviter toute fuite à cet endroit.

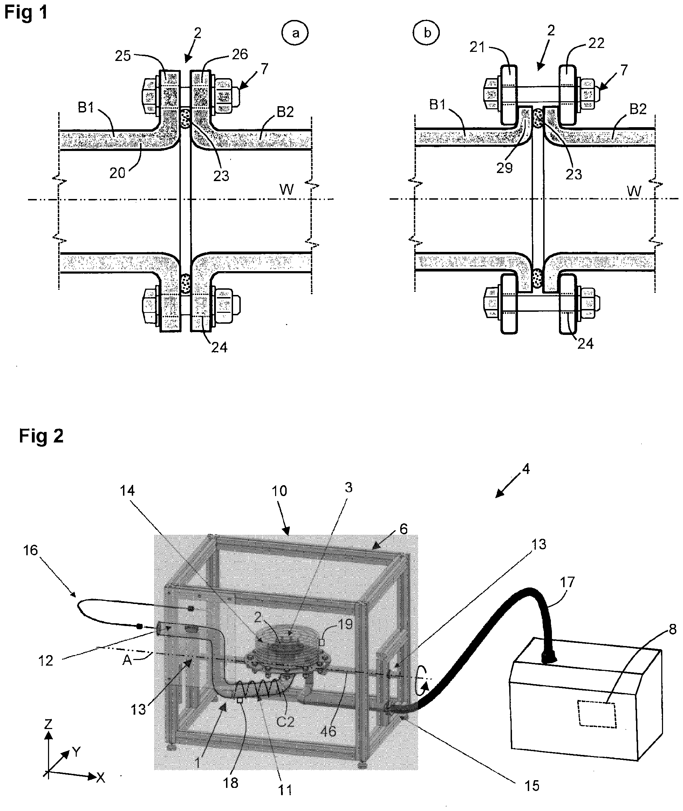

Pour compresser convenablement le joint d'étanchéité, on utilise habituellement un montage à brides. Une première bride appuie derrière une collerette d'une première conduite et une deuxième bride appuie derrière une collerette d'une deuxième conduite, les brides étant serrées ensemble, l'une en direction de l'autre, par une pluralité de moyens de serrage comme par exemple des boulons. Ce type de configurations est illustrée à la figure 1.

Il n'est pas exclu d'utiliser d'autres types de montage avec par exemple un manchon à serrage ou un système de colliers.

Dans le cadre d'une installation à base d'énergie nucléaire, il est très important de s'assurer que le système de raccord à brides et le joint d'étanchéité pourront assurer une performance d'étanchéité souhaitée tout le long de la vie de l'installation, sans avoir de possibilité de démonter l'assemblage ainsi constitué.

Les présents inventeurs développent de nouvelles solutions de réacteurs nucléaires dits de quatrième génération à base de sels fondus, et ils ont conçu un dispositif et un procédé pour pouvoir tester une configuration de raccord joignant deux éléments hydrauliques, notamment deux conduites accouplées prévues pour convoyer un flux de liquide à sels fondus.

A cet effet, il est proposé un dispositif de détection de fuite pour caractériser un montage de raccord reliant deux éléments hydrauliques entre eux, le dispositif comprenant une canalisation de test comprenant une première portion de canalisation en cul-de-sac et une deuxième portion de canalisation couplée à la première portion via le montage de raccord,
la deuxième portion de canalisation étant reliée à un système de mise en pression sous gaz léger par une entrée de gaz léger,
la canalisation de test contenant une quantité prédéterminée de sels fondus,
le dispositif comprenant une cinématique de déplacement de la canalisation de test, déplaçable entre une première position dans laquelle la zone du raccord est baignée par les sels fondus contenus dans la canalisation de test et une deuxième position dans laquelle la zone du raccord n'est pas baignée par les sels fondus, mais soumise à une pression de gaz léger, avec un passage continu de gaz depuis l'entrée de gaz léger jusqu'à la zone de raccord, le dispositif comprenant une enceinte hermétique renfermant au moins le raccord.

S'il existe une fuite au niveau du raccord, alors que la canalisation de test est en deuxième position, du gaz léger va se répandre dans l'enceinte hermétique, préalablement tirée au vide, et le gaz léger pourra être détecté, même en infime quantité, au moyen d'un spectromètre tel que connu en soi.

Grâce à ces dispositions, il est possible de détecter une performance d'étanchéité insuffisante au niveau du raccord, en conservant le montage intact, i.e. sans le démonter.

Le dispositif de détection permet de procéder à des tests notamment de cyclage représentant et simulant la durée de vie du montage de raccord. Si une fuite est détectée, la solution proposée est modifiée et un nouveau design est proposée et une nouvelle séquence de test est menée à bien avec le nouveau design, et ainsi de suite jusqu'à ce que la solution soit pleinement satisfaisante.

Avantageusement, le gaz léger peut être de l'hélium, qui est un gaz de bonne disponibilité.

Exprimé autrement, le dispositif de détection de fuite permet une caractérisation de la performance d'étanchéité du raccord. On détecte une fuite d'hélium à l'aide d'un spectromètre de masse, ce qui permet de détecter une quantité infime d'hélium ayant fui au travers du raccord. Le test proposé permet de caractériser de manière très fine les performances d'étanchéité poussées requises pour le montage de raccord d'intérêt ici

Les sels fondus dont il est question ici peuvent être de nature quelconque. Il faut remarquer que l'astuce du déplacement selon l'invention proposée ici peut même fonctionner pour tout type de liquide et tout type de montage de raccord.

Il faut noter que dans la première position, la zone de raccord est entièrement baignée par les sels fondus, à la pression de test. Toute la périphérie du joint et du montage de raccord est soumise aux contraintes physico-chimiques imposées notamment par le contact des sels fondus qui s'avèrent en pratique agressifs du point de vue physico-chimique.

Selon une réalisation, les deux éléments hydrauliques sont respectivement deux conduites hydrauliques.

On trouve de nombreuses configurations de raccord de deux conduites hydrauliques bout à bout dans une installation de type centrale énergétique, notamment à base de réaction nucléaire.

On note que le matériau de la première conduite hydraulique peut être différent du matériau de la deuxième conduite hydraulique avec des dilatations thermiques qui peuvent être différentes. Ceci peut conduire à des contraintes de cisaillement sur le joint, en plus des contraintes de compression. La sollicitation du joint en statique et variations peut être assez conséquente. La dilatation différentielle entre les **vis** de serrage et les **brides,** notamment selon l'axe des vis (les vis, les brides et les conduites étant faits de matériaux différents), peuvent entrainer des variations de l'effort de serrage, et des déplacements des surfaces de contact conduisant à des risques de mauvaise étanchéité.

On peut par exemple envisager pour les conduites des matériaux tels que des aciers spéciaux, des alliages à base de nickel, des céramiques comme le carbure de silicium, ou encore les composites à matrice céramique.

Selon une réalisation, le raccord est un raccord à brides.

Ce type de raccord est mentionné et exposé dans les premiers paragraphes du présent document. Ce type de raccord comprend habituellement un nombre assez important de boulons de serrage, l'ordre de serrage et la méthode de serrage peuvent être optimisés en fonction des résultats obtenus par les tests d'étanchéité proposés ici.

Moyennant quoi, le dispositif de détection proposé permet d'optimiser la configuration géométrique du raccord à brides ainsi que la méthode de serrage des boulons de serrage.

Selon une réalisation, la cinématique de déplacement est formée par une rotation.

Un montage à rotation est relativement simple à concevoir et facile à mettre en oeuvre.

Selon une réalisation, la course angulaire séparant la première position de la deuxième position est choisie de préférence entre 30° et 180°.

Selon une réalisation particulière, la course angulaire séparant la première position de la deuxième position peut être comprise entre 90° et 120°.

Selon une réalisation, l'enceinte hermétique pivote avec la canalisation de test.

Moyennant quoi, il n'est pas nécessaire de prévoir un joint tournant à la frontière entre le volume tiré au vide et l'extérieur. On peut ainsi avoir une enceinte hermétique présentant une bonne étanchéité et que l'on peut tirer au vide à un vide poussé, e.g. de quelques centièmes d'atmosphère.

Selon une réalisation, il est prévu une ou plusieurs sondes de pression, la pression dans la canalisation de test étant pilotée par des moyens de commande. La pression est pilotée dans le domaine de la pressurisation positive de la canalisation dans la phase de simulation du service normal de la canalisation de test. La pression est aussi pilotée dans le domaine du vide dans l'enceinte hermétique pour la phase de détection de fuite.

Selon une réalisation, il est prévu une ou plusieurs résistances chauffantes et une ou plusieurs sondes de température, la température étant pilotée dans la canalisation de test et/ou l'enceinte hermétique via des moyens de commande.

Selon une réalisation, le dispositif de détection de fuite comprend une pompe à vide pour procéder à un tirage au vide de l'enceinte hermétique en vue de détecter une éventuelle présence gaz léger par spectrométrie.

Selon une réalisation, il est prévu une injection d'azote dans l'enceinte hermétique en dehors des séquences de tirage au vide. La remise en pression via de l'azote rend possible des échanges thermiques entre la paroi de l'enceinte hermétique et le montage de raccord à brides pour contribuer au pilotage de la température. En effet, les transferts radiatifs, seuls vecteurs de chaleur sous vide, sont beaucoup moins efficaces.

Selon une réalisation, la première portion comporte un volume formant réservoir pour héberger les sels fondus lorsque la canalisation de test est dans la deuxième position.

On peut ainsi minimiser les dimensions de la canalisation de test pour un volume de sels fondus donné. Autrement dit, on propose une solution compacte si on la compare avec une solution à conduites linéaires.

Selon une réalisation, la température des sels fondus est comprise entre 600°C et 950°C. On choisit les matériaux de la canalisation de test, du montage de raccord et de l'enceinte hermétique de manière à ce qu'ils supportent des températures aussi élevées.

Selon un deuxième aspect, la présente invention vise aussi un procédé de détection de fuite pour caractériser, notamment en terme de performance d'étanchéité, un montage de raccord reliant deux éléments hydrauliques entre eux, le dispositif comprenant une canalisation de test comprenant une première portion en cul-de-sac et une deuxième portion couplée à la première portion via le montage de raccord, la deuxième portion de canalisation étant reliée à un système de mise en pression sous gaz léger par une entrée de gaz léger, la canalisation de test contenant une quantité prédéterminée de sels fondus, le dispositif comprenant une enceinte hermétique renfermant au moins le raccord, le procédé comprenant :
a- amener la canalisation de test, via une cinématique de déplacement de la canalisation de test, dans une première position dans laquelle la zone du raccord est baignée par les sels fondus contenus dans de la canalisation de test,
c1- amener la canalisation de test dans une deuxième position dans laquelle la zone du raccord n'est pas baignée par les sels fondus, mais soumise à la pression de gaz léger, avec un passage continu depuis l'entrée de gaz léger jusqu'à la zone de raccord,
c2- tirer l'enceinte hermétique au vide,
c3- surveiller une éventuelle apparition de molécules de gaz léger dans l'enceinte hermétique au moyen d'un spectromètre de masse.

Le procédé ainsi proposé s'avère simple, répétable et fiable. La performance d'étanchéité sur la durée de vie prévue du montage de raccord, peut être ainsi évaluée.

Le procédé peut comprendre une étape b- de mise en température et en pression de la canalisation de test pour atteindre les conditions de sollicitations physico-chimiques simulant les conditions de service.

Selon une réalisation, la température des sels fondus simulant un service normal est comprise entre 450°C et 950°C, et la pression dans la canalisation de test est comprise entre 1 bar et 10 bar.

Selon une réalisation, l'enceinte hermétique pivote avec la canalisation de test.

Moyennant quoi, il n'est pas nécessaire de prévoir un joint tournant à la frontière entre le volume tiré au vide et l'extérieur, et un haut niveau d'herméticité peut être obtenu.

Selon une réalisation, on procède à un ou plusieurs cyclages en température et/ou en pression. Moyennant quoi, on peut simuler de manière assez fidèle les contraintes subies dans une utilisation classique pour un circuit de transport thermique utilisant des sels fondus.

L'invention sera davantage détaillée par la description de modes de réalisation non limitatifs, et sur la base des figures annexées illustrant des variantes de l'invention, dans lesquelles :
- [Fig.1] illustre une vue en coupe d'un montage de raccord entre deux conduites hydrauliques, selon deux variantes de réalisation, avec ou sans brides spécifiques ;
- [Fig.2] représente schématiquement un exemple de dispositif de détection de fuite selon un mode de réalisation ;
- [Fig.3] montre un premier exemple de canalisation de test, selon trois positions différentes, notamment selon la première position d'intérêt, et selon la deuxième position d'intérêt ;
- [Fig.4] montre un deuxième exemple de canalisation de test, selon la première position d'intérêt ;
- [Fig.5] montre le deuxième exemple de canalisation de test, selon la deuxième position d'intérêt ;
- [Fig.6] illustre un troisième exemple de canalisation de test, selon la première position d'intérêt et la deuxième position d'intérêt ;
- [Fig.7] illustre un logigramme d'un exemple des étapes de procédé ;
- [Fig.8] montre un diagramme fonctionnel du système de gaz et d'une partie du système de commande.

Sur les différentes figures, les mêmes références désignent des éléments identiques ou similaires. Pour des raisons de clarté de l'exposé, certains éléments ne sont pas nécessairement représentés à l'échelle.

En référence à la figure 1, on décrit maintenant un montage de raccord **2** entre une première conduite **B1** et une deuxième conduite **B2.** Les conduites sont généralement de révolution autour d'un axe **W.** Les deux conduites sont alignées sur un même axe **W** en vue de leur accouplement dans une position bout à bout.

Un joint d'étanchéité **23** est interposé entre les bordures avant des conduites. Le joint d'étanchéité **23** peut par exemple être réalisé à base d'un élastomère à hautes performances, synthétique ou naturel.

Dans l'exemple représenté à gauche, cf Figure 1(a), chaque conduite comprend une collerette annulaire **25,26** assez large dans laquelle sont ménagés des trous **24.** Il est prévu une pluralité de trous 24 répartis sur la collerette tout autour de l'axe **W.** Les deux collerettes **25,26** s'étendent radialement vers l'extérieur à partir de la section courante de la conduite. Les deux collerettes **25,26** sont assemblées par des boulons **7** reçus dans les trous **24.** Le nombre de boulons peut aller de 8 à 16 sans que ces valeurs ne soient limitatives.

Dans l'exemple représenté à droite, cf Figure 1(b), chaque conduite comprend une collerette annulaire **29** de plus petite extension radiale. Dans cette configuration, le montage à brides 2 comprend une première bride **21,** de forme annulaire, qui appuie derrière la collerette **29** de la première conduite **B1** et une deuxième bride **22,** de forme annulaire, qui appuie derrière la collerette **29** de la deuxième conduite **B2.** Les brides **21,22** sont serrées ensemble, l'une en direction de l'autre, par une pluralité de moyens de serrage comme par exemple des boulons **7**. Là aussi, les boulons **7** au nombre de 8 à 16 sont répartis sur la collerette tout autour de l'axe **W.**

Bien que l'on ait représenté un raccord de conduite à conduite, les montages de raccord décrits ci-dessus peuvent être utilisés pour accoupler une conduite à une cuve ou pour accoupler une conduite à une pompe. Exprimé de façon générique, on s'intéresse à un montage de raccord **2** qui permet d'accoupler deux éléments hydrauliques entre eux.

On s'intéresse à des éléments hydrauliques, canalisations, conduites ou cuves qui contiennent et/ou transportent un fluide de type sels fondus.

Les sels fondus peuvent être par exemple des sels chlorés ou des sels fluorés.

Dans l'exemple illustré, les sels fondus sont utilisés comme media de transport thermique dans un circuit primaire dans un réacteur nucléaire de 4e génération. Toutefois, les conduites à sels fondus peuvent être utilisées dans d'autres applications.

Les sels fondus sont en phase liquide dans la configuration d'utilisation. Toutefois il faut remarquer que les sels fondus, à la température ambiante, sont dans un état solide granulaire. Il faut donc les chauffer pour qu'ils deviennent liquide.

Les sels fondus sont à des températures élevées qui se situent typiquement dans une gamme comprise entre 450°C et 950°C. Selon un exemple d'application, la température en service des sels fondus se trouve dans une gamme entre 550°C et 750°C. Selon un autre exemple d'application, la température en service des sels fondus peut se trouver dans une gamme entre 700°C et 850°C.

La pression en service dans les conduites de sels fondus est comprise entre 1 bar et 10 bar.

Dans ces conditions, il est très important de s'assurer que le système de raccord et le joint d'étanchéité qui relient les deux éléments hydrauliques concernés pourront assurer une performance d'étanchéité souhaitée tout le long de la vie de l'installation, sans avoir de possibilité de démonter l'assemblage ainsi constitué.

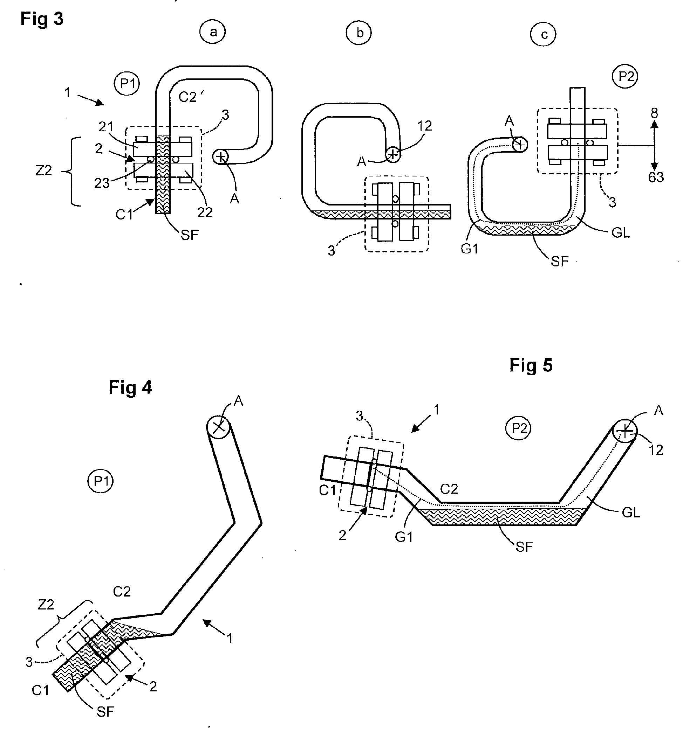

On utilise avantageusement pour cela un dispositif de détection de fuite **4** représenté schématiquement à la figure 2 et aux figures 3 à 6.

Le dispositif de détection de fuite proposé comprend une canalisation de test **1.**

La canalisation de test **1** comprend une première portion **C1** et une deuxième portion **C2** couplée à la première portion via le montage de raccord. La première portion **C1** est en cul-de-sac. La deuxième portion **C2** est en communication fluide avec une source de pression de gaz léger **GL.** Le gaz léger peut être comme dans l'exemple illustré de l'hélium. Bien entendu, un autre gaz léger tel que l'argon ou autre pourrait être utilisé en lieu et place de l'hélium.

Dans l'exemple illustré, la canalisation de test **1** contient une quantité prédéterminée de sels fondus **SF,** qui ont été introduits sous-forme de granulés solides, puis chauffés afin de les liquéfier.

Il est prévu dans le dispositif de détection des moyens pour chauffer la deuxième portion de canalisation notamment à l'endroit où se trouve généralement les sels fondus.

On utilise pour cela par exemple un enroulement chauffant **11** qui entoure la deuxième portion de canalisation. Dans l'exemple illustré, le dispositif de détection est équipé d'au moins une sonde de température qui permet une régulation de la température des sels fondus dans un intervalle de température souhaité.

Plus précisément, il est prévu une première sonde de température **18** en couplage thermique avec la deuxième portion **C2** de la canalisation de test **1.**

En outre, il peut être prévu une deuxième sonde de température **19** en couplage thermique avec l'enceinte hermétique **3.**

Dans l'exemple illustré, le dispositif de détection est supporté par un cadre **6.** Des paliers **13** sont prévus pour recevoir un arbre de rotation **A** qui sert de base à la cinématique de pivotement qui sera détaillée plus loin.

D'une façon générale, il est prévu que le dispositif comprenne une cinématique de déplacement de la canalisation de test. Plus précisément, la canalisation de test est déplaçable entre une première position **P1** dans laquelle la zone du raccord **Z2** est baignée par les sels fondus contenus dans la canalisation de test et une deuxième position **P2** dans laquelle la zone du raccord **Z2** n'est au contraire pas baignée par les sels fondus.

Trois exemples d'agencement d'une cinématique à pivotement sont illustrés aux figures 3 à 6. Bien entendu, il n'est pas exclu d'utiliser d'autres configurations de déplacement qui ne soient pas des rotations strictes.

La première position **P1** correspond à la position de service en utilisation normale du montage de raccord. Dans la première position **P1,** le montage de raccord **2** est complètement baigné par phase liquide des sels fondus. La zone du raccord **Z2** est mise sous pression par la pressurisation fournie par le gaz léger.

La deuxième position **P2** permet de tester la performance d'étanchéité du montage à raccord, particulièrement mais non exclusivement, concernant le joint d'étanchéité **23.**

Dans la deuxième position **P2** la canalisation de test **1** est soumise à la pression de gaz léger **GL,** avec un passage continu du gaz depuis l'entrée de gaz léger **12** jusqu'à la zone de raccord **Z2.**

D'une façon générale, la course angulaire séparant les première et deuxième positions **P1, P2** peut être comprise entre 30° et 180°.

Le dispositif de détection comprend une enceinte hermétique **3** renfermant au moins le raccord **2.**

L'enceinte hermétique **3** pivote avec la canalisation de test.

Dans l'exemple illustré, il est prévu une ou plusieurs sondes de pression. Plus précisément, il est prévu un premier capteur de pression **44** en amont du raccord, sur la deuxième portion de canalisation de test.

La pression est pilotée dans la canalisation de test.

On remarque que la conduite de tirage au vide et la conduite de mise en pression reliée à la deuxième portion de canalisation sont des conduites **souples,** qui peuvent être déformées par torsion selon leur axe d'extension ou déformées par flexion, sans être endommagées et sans perdre leurs propriétés de conduite fluide. L'angle de torsion subi dépend de la différence angulaire entre la première position P1 et la deuxième position P2.

On a illustré sur la figure 3 une configuration où la course angulaire est de 180°. Dans la deuxième position P2, un passage continu libre **GL** est créé depuis l'entrée de gaz **12** jusqu'à la zone de raccord **2,** sans que les sels fondus n'empêchent le gaz sous pression de rejoindre la zone de raccord Z2 et le joint d'étanchéité. S'il existe un passage de fuite, si petit soit-il, des molécules de gaz léger vont s'échapper et arriver dans l'enceinte hermétique 3 qui a préalablement été tirée au vide par la pompe à vide 63.

On a illustré aux figures 4 et 5 une deuxième configuration où la course angulaire est d'environ 45°. Dans cette configuration, la course angulaire est beaucoup plus faible et la déformation occasionnée sur les tuyaux souples, celui qui alimente la canalisation de test en gaz léger ainsi que celui qui permet de tirer au vide de l'enceinte hermétique, est également beaucoup plus faible.

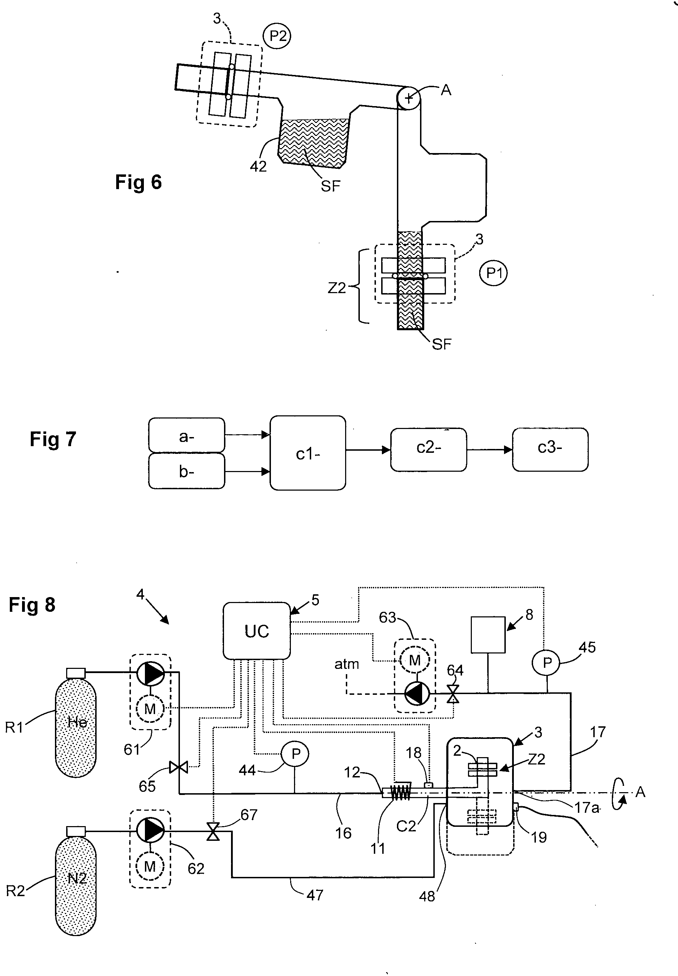

On a illustré sur la figure 6 une troisième configuration où la course angulaire est d'environ 100°.

La figure 6 illustre aussi l'astuce d'utiliser un volume formant réservoir repéré **42** qui permet de diminuer les dimensions générales et d'augmenter la compacité générale de l'agencement à iso quantité de sels fondus et iso géométrie du montage de raccord **2.**

Le fonctionnement est identique ou similaire pour les 3 exemples de configuration géométrique exposés aux figures 3 à 6.

En référence à la figure 8, le dispositif de détection est supporté par un cadre de support **6,** ici un cadre tubulaire. Un arbre tournant **46,** qui sert de base au mouvement de pivotement autour de l'axe **A,** est reçu dans deux paliers 13 qui sont solidaires du cadre de support.

Le dispositif de détection comprend un équipage tournant constitué de la canalisation de test **1,** de l'enceinte hermétique **3,** de la sonde de température **19** et de résistances chauffantes **14** qui peuvent être adjointes ou intégrées à l'enceinte hermétique **3.**

Sur l'exemple représenté à la figure 8, la canalisation de test **1** présente une forme en L avec la branche longue alignée sur l'axe **A** horizontal, et perpendiculairement on trouve la branche courte portant la deuxième portion **C2.** On a représenté en pointillé la position **P1** avec la branche courte vers le bas, alors qu'on a représenté en trait plein la position **P2** avec la branche courte vers le haut.

Le dispositif de détection comprend une unité de commande repérée **5.** L'unité de commande **5** fait partie d'un ensemble appelé génériquement 'moyens de commande' qui sont utilisés pour mettre en oeuvre le procédé proposé.

Comme visible à la figure 2, le dispositif de détection **4** est repéré par rapport à un repère orthogonal suivant : la direction verticale est notée **Z,** la direction horizontale dite longitudinale est notée **X,** la direction horizontale dite transversale est notée **Y.** L'axe **A** est parallèle à **X.**

On remarque que la rotation de l'équipage tournant autour de l'axe A peut être fait manuellement ou peut être motorisé.

Le dispositif de détection comprend un réservoir d'hélium **R1,** e.g. plus généralement un réservoir de gaz léger. L'hélium est injecté dans la canalisation de test **1** via un tuyau de liaison **16** et via l'entrée de gaz léger **12.** Le tuyau de liaison **16** est souple, à savoir il autorise une flexion et/ou une torsion. On choisit la longueur du tuyau assez généreuse pour autoriser une déformation induite par une rotation de 180°. Le tuyau souple peut être formé comme un serpentin ou une spirale.

On remarque que l'entrée **12** est dans une position voisine de l'axe.

Suivant la pression disponible dans le réservoir d'hélium **R1,** on peut avoir recours à un organe de réduction et régulation de pression. Dans l'exemple illustré, on fait appel au contraire à une pompe **61** pilotée par l'unité de commande **5.**

Le pilotage de la pompe à hélium **61** permet d'ajuster la pression régnant dans la canalisation de test **1,** en conjonction avec les informations remontées par la sonde de pression **44.**

La pression d'hélium dicte la pression des sels fondus. De préférence, on . utilise la pression en cohérence avec la pression qui est prévue dans les conditions de service normal de la conduite de sels fondus. Par exemple la pression peut être comprise entre 1 bar et 10 bar.

A la fin de la séquence de test sous pression dans la première position **P1,** il est prévu de procéder à une séquence de détection de fuite.

On détecte une présence de gaz léger par spectrométrie, grâce à un spectromètre de masse **8.**

Pour ce faire on tire au vide l'enceinte hermétique **3** via le tuyau **17** qui relie fluidiquement le volume intérieur de l'enceinte hermétique **3** au spectromètre de masse **8,** et à une pompe à vide **63** via une électrovanne d'isolation **64.**

Le tuyau de tirage au vide **17** est souple, en pratique il autorise une flexion et/ou une torsion. On choisit la longueur du tuyau assez généreuse pour autoriser une déformation induite par une rotation de 180°.

Il est prévu une deuxième sonde de pression **45** qui mesure la pression dans tuyau de tirage au vide **17.** Cette deuxième sonde de pression peut être située dans l'appareillage de spectromètre de masse **8.**

On remarque que le piquage 17a est dans une position voisine de l'axe, la rotation de l'équipage tournant entraîne essentiellement une déformation du tuyau souple de tirage au vide **17.**

Selon une caractéristique optionnelle, en dehors des phases de détection de fuite, on ne laisse pas perdurer le tirage au vide de l'enceinte hermétique **3.** En pratique, on introduit de l'azote dans l'enceinte hermétique afin de favoriser les échanges thermiques entre la paroi de l'enceinte hermétique et le montage de raccord sous test, afin de contribuer au contrôle de la température du montage de raccord sous test.

A cet effet, il est prévu un réservoir d'azote noté **R2.** Ici aussi, on peut utiliser un réducteur avec fonction de régulation de pression si la pression dans la bouteille d'azote est suffisante. Toutefois, dans l'exemple illustré, on utilise au contraire une pompe **62** pilotée par l'unité de commande **5.**

Il est prévu un tuyau présentant une certaine souplesse, repéré **47,** pour relier la fourniture d'azote au volume intérieur de l'enceinte hermétique.

Il est prévu sur ce tuyau souple **47** une vanne manuelle ou une électrovanne **67** qui permet de bien isoler le volume intérieur de l'enceinte hermétique 3 afin de pouvoir la tirer au vide.

Le tuyau souple **47** est raccordé fluidiquement à l'enceinte hermétique via un port **48** qui se trouve par exemple à proximité de l'axe de rotation.

Concernant la pression qui règne dans la canalisation de test **1,** on note qu'il est prévu une vanne manuelle ou une électrovanne **65** pour alimenter sélectivement en gaz léger la canalisation de test **1.**

La température dans la canalisation de test **1** est pilotée par l'unité de commande **5.**

La deuxième portion **C2** de la canalisation de test 1 est équipée de résistances chauffantes **11** sous forme de serpentin ou d'enroulement qui épouse par l'extérieur la deuxième portion **C2** de la canalisation.

L'enceinte hermétique **3** est équipée de résistances chauffantes **14.**

Ces résistances chauffantes 11,14 sont de préférence pilotées par l'unité de commande **5,** ce qui permet de réguler la température de la canalisation de tests **1** dans un intervalle de température prescrit ou bien selon un cyclage de température prédéterminé.

En référence à la figure 7, le procédé proposé comprend les étapes suivantes, réalisées partiellement ou totalement au moyen de l'unité de commande **5** :
a- amener la canalisation de test (équipage tournant), via la cinématique de déplacement de la canalisation de test, dans la première position **P1,**
**b-** mise en température et en pression de la canalisation de test **1** pour atteindre les conditions de sollicitations physico-chimiques simulant les conditions de service, (les étapes a- et b- pouvant être réalisées dans un ordre indifférent),
**c1-** amener la canalisation de test (équipage tournant), dans la deuxième position **P2,**
**c2-** tirer l'enceinte hermétique **3** au vide, via la pompe à vide, puis le cas échéant ferme la vanne d'isolation **64,**
**c3-** surveiller une éventuelle apparition de molécules de gaz léger dans l'enceinte hermétique **3** au moyen d'un spectromètre de masse **8.**

Selon un autre aspect, du point de vue thermique, il peut être prévu que les tuyaux souples **16,17** (et optionnellement **47)** présentent une faible conductivité thermique, de manière à ce que lorsque la canalisation de test est portée à des températures de plusieurs centaines de degrés, les équipements auxiliaires à l'extérieur du cadre support **6** ne soient pas chauffés outre-mesure et restent à des températures raisonnables.

Il en est de même concernant les paliers **13** qui supportent la rotation de l'arbre **46** concernant la cinématique de rotation, lesdits paliers **13** et/ou l'arbre **46** présentant une faible conductivité thermique.

Les vannes d'isolation 65 et 67, respectivement sur le tuyau d'alimentation en gaz léger 16 et le tuyau d'alimentation en azote 47 peuvent être chacune complétée par un clapet anti-retour.

Selon un exemple, le volume de l'enceinte hermétique est petit, quelques dizaines de cm³, voire quelques litres, sans que ces valeurs soient limitatives.

Le diamètre des conduites peut être typiquement compris entre100 mm et 400 mm, sans que ces valeurs soient limitatives.

## Revendications

1. Dispositif de détection de fuite (4) pour caractériser un montage de raccord (2) reliant deux éléments hydrauliques entre eux,
le dispositif comprenant une canalisation de test (1) comprenant une première portion (C1) en cul-de-sac et une deuxième portion (C2) couplée à la première portion via le montage de raccord, la deuxième portion de canalisation étant reliée à un système de mise en pression sous gaz léger (GL) par une entrée (12) de gaz léger, la canalisation de test contenant une quantité prédéterminée de sels fondus (SF),
le dispositif comprenant une cinématique de déplacement de la canalisation de test, déplaçable entre une première position (P1) dans laquelle la zone du raccord (Z2) est baignée par les sels fondus contenus dans la canalisation de test et une deuxième position (P2) dans laquelle la zone du raccord n'est pas baignée par les sels fondus, mais soumise à une pression de gaz léger, avec un passage continu du gaz depuis l'entrée de gaz léger (12) jusqu'à la zone de raccord (Z2), le dispositif comprenant une enceinte hermétique (3) renfermant au moins le raccord (2).

2. Dispositif de détection selon la revendication 1, dans lequel les deux éléments hydrauliques sont respectivement deux conduites hydrauliques (B1,B2).

3. Dispositif de détection selon l'une des revendications 1 à 2, dans lequel le raccord est un raccord à brides (21,22).

4. Dispositif de détection selon l'une des revendications 1 à 3, dans lequel la cinématique de déplacement est formée par une rotation, de préférence avec une course angulaire entre 30° et 180° séparant les première et deuxième positions (P1,P2).

5. Dispositif de détection selon l'une des revendications 1 à 4, dans lequel . l'enceinte hermétique (3) pivote avec la canalisation de test (1).

6. Dispositif de détection selon l'une des revendications 1 à 5, dans lequel il est prévu une ou plusieurs sondes de pression (44,45), la pression dans la canalisation de test étant pilotée par des moyens de commande (5).

7. Dispositif de détection selon l'une des revendications 1 à 6, dans lequel il est prévu une ou plusieurs résistances chauffantes (11,14) et une ou plusieurs sondes de température (18,19), la température étant pilotée dans la canalisation de test et/ou l'enceinte hermétique via des moyens de commande (5).

8. Dispositif de détection selon l'une des revendications 1 à 7, dans lequel le dispositif de détection de fuite comprend une pompe à vide (63) pour procéder à un tirage au vide de l'enceinte hermétique (3) en vue de détecter une éventuelle présence gaz léger par spectrométrie.

9. Dispositif de détection selon l'une des revendications 1 à 8, dans lequel le dispositif de détection de fuite comprend en outre un réservoir d'azote (R2) et **il** est prévu une injection d'azote dans l'enceinte hermétique en dehors des séquences de tirage au vide.

10. Dispositif de détection selon l'une des revendications 1 à 9, dans lequel la première portion comporte un volume formant réservoir (42) pour héberger les sels fondus lorsque la canalisation de test est dans la deuxième position (P2).

11. Dispositif de détection selon l'une des revendications 1 à 10, dans lequel la température des sels fondus est comprise entre 450°C et 950°C.

12. Procédé de détection de fuite pour caractériser un montage de raccord (2) reliant deux éléments hydrauliques entre eux,
le dispositif comprenant une canalisation de test (1) comprenant une première portion (C1) en cul-de-sac et une deuxième portion (C2) couplée à la première portion via le montage de raccord, la deuxième portion de canalisation étant reliée à un système de mise en pression sous gaz léger (GL) par une entrée de gaz léger (12), la canalisation de test contenant une quantité prédéterminée de sels fondus (SF), le dispositif comprenant une enceinte hermétique (3) renfermant au moins le raccord, le procédé comprenant :
a- amener la canalisation de test, via une cinématique de déplacement de la canalisation de test, dans une première position (P1) dans laquelle la zone du raccord est baignée par les sels fondus contenus dans de la canalisation de test,
c1- amener la canalisation de test dans une deuxième position (P2) dans laquelle la zone du raccord n'est pas baignée par les sels fondus, mais soumise à la pression de gaz léger, avec un passage continu depuis l'entrée de gaz léger jusqu'à la zone de raccord,
c2- tirer l'enceinte hermétique au vide,
c3- surveiller une éventuelle apparition de molécules de gaz léger dans l'enceinte hermétique au moyen d'un spectromètre de masse.

13. Procédé de détection selon la revendication 12, dans lequel la température des sels fondus simulant un service normal est comprise entre 450°C et 950°C, et la pression dans la canalisation de test (1) est comprise entre 1 bar et 10 bar.

14. Procédé de détection selon l'une des revendications 12 à 13, dans lequel l'enceinte hermétique (3) pivote avec la canalisation de test.

15. Procédé de détection selon l'une des revendications 12 à 14, dans lequel on procède à un ou plusieurs cyclages en température et/ou en pression.
